# FASCICULE DE BREVET EUROPEEN

(11) **EP 0 403 348 B1**
(45) Date de publication et mention de la délivrance du brevet: **15.09.1993**
(21) Numéro de dépôt: 90401588.0
(22) Date de dépôt: 11.06.1990
(51) Int. Cl.: A01G 31/00

(54) **Substrats de culture hors-sol**
Erdlose Kultursubstrate
Soilless culture substrates

(30) Priorité: 15.06.1989 FR 8907929
(43) Date de publication de la demande: 19.12.1990
(73) Titulaire: ISOVER SAINT-GOBAIN, F-92400 Courbevoie (FR)
(72) Inventeur: Vos, Jacques, F-78400 Chatou (FR); Millet, François, F-78400 Chatou (FR)
(74) Mandataire: Le Vaguerèse, Sylvain Jacques

(56) Documents cités:
- EP-A- 230 799
- EP-A- 0 169 687
- EP-A- 0 277 397
- US-A- 3 962 823

## Description

L'invention concerne des substrats de culture hors-sol gainés.

De façon plus précise, l'invention concerne les substrats que l'on désigne communément sous le nom de "pains" et qui ont pour particularité de recevoir ordinairement plusieurs plants espacés régulièrement sur leur longueur. Ces pains, lorsque la culture se développe en plusieurs étapes suivant la croissance des plants, sont utilisés dans l'étape ultime. Ce sont des éléments qui, de façon typique, présentent une longueur de 80 à 200 cm pour une largeur de 8 à 30 cm et une hauteur de 4 à 15 cm, les dimensions variant sensiblement selon notamment la nature du matériau du substrat et les cultures considérées.

Les pains les plus usuels sont constitués de matériaux fibreux de type laine de roche ou laine de verre ou de matériaux synthétiques comme les mousses phénoliques. Ces matériaux forment le substrat proprement dit sur lequel s'effectue la culture. Dans la suite, nous nous référerons essentiellement à des pains constitués de fibres minérales.

Il est connu d'envelopper les pains dans une gaine constituée, ordinairement, par un film polymère par exemple en polyéthylène ou en polychlorure de vinyle. Un exemple de ce type de réalisation est fourni par la demande EP-A-0 277 397.

Les raisons qui conduisent à l'utilisation de cette gaine sont de différents ordres. En premier lieu, s'agissant de substrats fibreux, il est usuel pour faciliter la répartition homogène de la solution au cours de la culture de procéder préalablement à une imprégnation complète du substrat au moyen d'une solution aqueuse pendant un temps plus ou moins long. Cette façon de procéder permet d'éviter la formation d'une circulation préférentielle ultérieure de la solution, circulation qui laisserait des zones entières non humectées. On constate expérimentalement que, lorsque le pain a été complètement imbibé une première fois, l'irrigation ultérieure intéresse l'ensemble du pain, même si la solution est apportée de façon très localisée. L'utilisation d'une gaine facilite l'opération préalable que l'on peut comparer à une immersion. Cette opération consiste en effet à remplir la gaine de solution, la gaine faisant alors office d'un bac dans lequel serait plongé le pain. Le maintien du pain dans cet état "immergé" est aussi long que l'on souhaite, son drainage ultérieur pour les étapes de culture étant obtenu simplement en pratiquant des perforations à la base de la gaine pour permettre l'écoulement de la solution.

Un autre rôle de la gaine est de protéger le substrat et les racines de la lumière. En interposant cet écran, on évite le développement d'algues. La gaine est également utilisée comme un "réflecteur" de lumière vers la partie aérienne des plants. Cet effet réflecteur est particulièrement intéressant pour les cultures conduites dans les périodes de l'année où la luminosité naturelle est très réduite. Pour favoriser cet effet réflecteur, on choisit ordinairement une gaine qui présente une face externe de couleur claire.

Pour les raisons qui viennent d'être rappelées, l'usage d'une gaine sur les pains est traditionnelle. La présence de la gaine impose cependant certaines contraintes à l'utilisateur et, en particulier, celui-ci doit pratiquer des ouvertures dans la gaine aux emplacements qu'il choisit pour situer les plants.

La pratique courante consiste à développer les jeunes plants sur des "cubes" ou "mottes" de dimensions limitées. Lorsque les plants ont atteint une croissance suffisante, les cubes sont placés sur les pains qui offrent un volume supplémentaire pour le développement du système racinaire. Selon la culture considérée et la dimension des pains, chaque pain reçoit ordinairement de 2 à 6 cubes. L'emplacement sur le pain, qui doit être dépouillé de la gaine pour permettre le contact cube-pain et le passage des racines, ne peut donc être déterminé au moment de la production de ces éléments. Il revient à l'horticulteur de dégager la partie de la gaine correspondante selon son choix.

L'opération consistant à découper la gaine à l'emplacement où sont disposés les cubes est effectuée manuellement et prend beaucoup de temps, ce qui n'est pas souhaitable dans les exploitations importantes.

La demande EP-A-0 230 799 présente des matériaux de culture hors-sol de type superabsorbant dans des gaines prédécoupées.

L'invention se propose de fournir des pains de culture gainés dont la mise en oeuvre soit facilitée et qui, en particulier, simplifient les opérations manuelles lors de la mise en place des cubes et sans que la gaine doive être redécoupée.

L'invention consiste à gainer les pains en prévoyant, sur la partie constituant la face supérieure des zones susceptibles de recevoir les cubes, sans pour autant découvrir le substrat à ces emplacements et sans qu'il soit nécessaire de découper la gaine.

Il s'agit selon l'invention de former la gaine de telle sorte que celle-ci laisse des ouvertures en ne soudant pas complètement le film dans la longueur du pain.

Les modalités de réalisation peuvent être variées. Elles doivent cependant toutes répondre à certaines exigences communes. En premier, la gaine selon l'invention doit rester bien solidaire du pain qu'elle recouvre. L'arrangement de la gaine dont il est question ne doit pas entraîner une séparation accidentelle de la gaine et du pain au cours des manipulations. En second, la confection de la gaine selon l'invention doit rester suffisamment simple pour que le coût de l'opération demeure acceptable pour ce type de produit. Dans toute la mesure du possible, les dispositions selon l'invention doivent répondre aux diverses applications possibles sans que l'utilisateur n'ait besoin de découper la gaine.

La suite de la description contient, de façon détaillée, des modes de réalisation faisant référence à la planche de dessins dans lesquels :
· **la figure 1** est une vue schématique, en perspective, d'un pain gainé traditionnel,
· **la figure 2** est une vue de dessus d'un mode de réalisation d'un pain gainé selon l'invention,
· **la figure 3** est une coupe A-A du pain gainé de la figure 2,
· **la figure 4** est une vue partielle, en perspective, montrant l'utilisation du pain gainé de la figure 2,

Traditionnellement, les pains de culture sont enveloppés dans un film de façon relativement lâche. L'enveloppe ou gaine est ordinairement confectionnée à partir d'un film polymère thermofusible, ce qui permet de constituer un ensemble étanche par soudure du film sur lui-même.

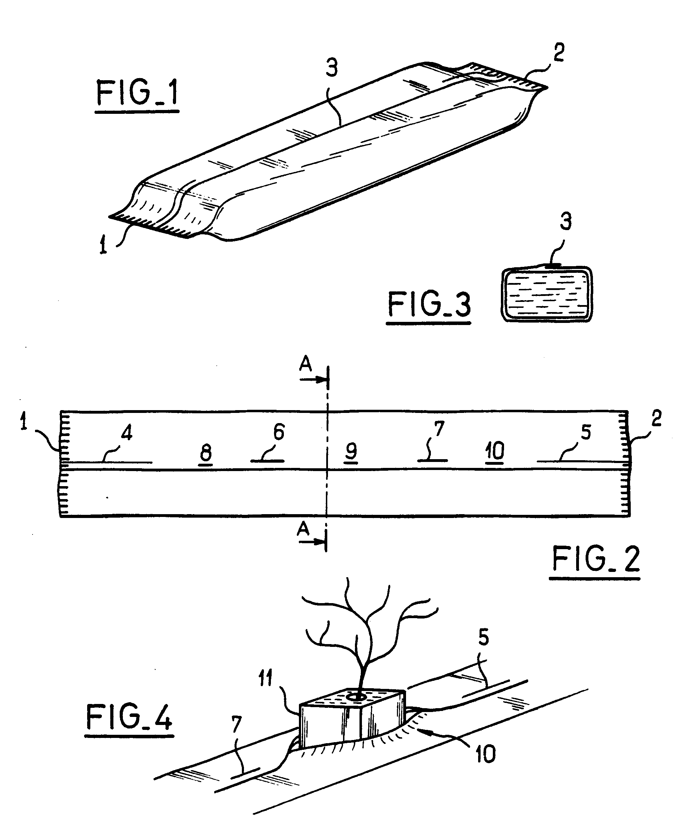

A la figure 1 le pain, de forme parallélépipèdique oblongue, est enveloppé dans un film qui, par exemple, est soudé sur lui-même à ses extrémités (1 et 2) dans la largeur du pain. Le film est également soudé, suivant les techniques traditionnelles, sur toute la longueur du pain (3). L'emplacement de la soudure longitudinale par rapport au substrat est peu important. Dans la mesure où cette soudure peut ne pas être parfaitement étanche, il est préféré de la placer à la partie supérieure du substrat ou, ce qui est équivalent, on choisit pour face supérieure celle à laquelle correspond la soudure. A la figure 1, on a placé cette soudure en un point quelconque de la face supérieure.

Le schéma de la figure 2 montre, sur une disposition de la gaine vis-à-vis du substrat analogue à celle de la figure 1, comment selon l'invention on facilite le dégagement de la gaine aux emplacements destinés à recevoir les cubes. Dans ce schéma, la gaine est comme précédemment soudée à ses deux extrémités (1 et 2). Contrairement à la réalisation de la figure 1, la soudure longitudinale n'est pas complète. Elle se limite aux parties voisines des extrémités (4 et 5) de manière à bien maintenir le film sur le pain et à quelques points (6 et 7) espacés dans la longueur, de telle sorte que l'enveloppe ne bée pas.

On comprend que la réalisation de soudures ponctuelles, du type présenté à la figure 2, soit plus facile que la soudure continue de la figure 1.

La présence des bords du film non soudés dans les zones indiquées (8, 9, 10) et une certaine élasticité du matériau constituant la gaine permettent, sans découpe, de dégager les emplacements correspondant aux cubes. Pour cela il suffit d'écarter les deux bords de la gaine, à l'emplacement choisi, et de placer le cube (11) dans l'ouverture ainsi ménagée, comme représenté schématiquement à la figure 4.

Dans ce mode d'utilisation, on comprend que le matériau de la gaine est légèrement distendu entre les traits de soudures (5 et 7). Il est ordinairement choisi pour offrir l'élasticité nécessaire, sans risquer de déchirer le film notamment aux soudures. Ceci est rendu d'autant plus facile que ces soudures successives sont plus espacées les unes des autres. De plus, en éloignant les zones de soudures, on élargit les zones dans lesquelles les cubes peuvent être disposés. On facilite par conséquent le choix de l'emplacement des plants sur le pain. Néanmoins les zones dans lesquelles le film n'est pas soudé ne doivent pas être trop étendues. Indépendamment du fait que le maintien du film sur le pain ne serait pas convenablement assuré, une pratique courante des horticulteurs s'y oppose. En effet dans de nombreuses exploitations les horticulteurs, avant même la phase finale mettant en jeu la croissance des plants sur les pains, disposent les cubes sur le pain. Dans cette étape, le cube doit rester isolé du substrat du pain par le film de la gaine. Il ne faut pas que les racines puissent pénétrer dans le pain afin de leur donner le complet développement correspondant à la "colonisation" du cube. Dans cette phase de croissance, les racines ne peuvent pénétrer dans le pain que si le film ne présente pas de discontinuité. Les zones (8, 9, 10) peuvent, en principe, laisser passer les racines et ce d'autant plus facilement qu'elles seront plus largement ouvertes et que le recouvrement des deux bords du film ne sera pas nécessairement parfait. Pour des ouvertures de dimensions limitées, le recouvrement des bords suffit en pratique à éviter la pénétration des racines.

## Revendications

1. Substrat de culture hors-sol destiné à recevoir plusieurs plants espacés lequel est enveloppé dans une gaine formée d'un film polymère dont la face supérieure comporte une pluralité d'ouvertures longitudinales (8,9,10) qui laissent la gaine recouvrir la quasi totalité du pain avant mise en place des plants, les ouvertures (8,9,10), en jouant de l'élasticité du film polymère, peuvent être élargies pour placer les cubes ou mottes (11) ayant servi au développement des plants dans une étape précédente de la culture, ces ouvertures (8,9,10) étant disposées de façon régulière correspondant à l'ensemble des emplacements susceptibles d'être dégagés pour y mettre les plants caractérisé en ce que la gaine enveloppant le matériau de culture est formée à partir d'une feuille qui est soudée aux deux extrémité (1,2) du substrat de forme parallélépipèdique et dans la longueur du substrat, la soudure longitudinale (4,5,6,7) s'étendant sur la face supérieure du substrat n'étant que partielle et ménageant les ouvertures (8,9,10) entre les deux bords de la feuille polymère.

## Patentansprüche

1. Substrat für erdelose Kulturverfahren, das zur Aufnahme von mehreren mit Zwischenraum angeordneten Pflanzen vorgesehen ist und in eine aus einem Polymerfilm gebildete Hülle eingeschlagen ist, deren obere Fläche eine Mehrzahl von Längsöffnungen (8,9,10) beinhaltet, welche es der Hülle erlauben, die Matte vor dem Einsetzen der Pflanzen fast zur Gänze zu bedecken; die Öffnungen (8,9,10) lassen sich dank der Elastizität des Polymerfilms aufweiten, um die Blöcke oder Ballen (11) aufzusetzen, welche in einer vorausgehenden Aufzuchtphase zur Entwicklung der pflanzen dienten, wobei diese Öffnungen (8,9,10) gleichmäßig angebracht sind, entsprechend der Gesamtheit von Stellen, die freigelegt werden können, um dort die Pflanzen aufzusetzen, **dadurch gekennzeichnet, daß** die das Aufzuchtmaterial umgebende Hülle ausgehend von einer Folie gebildet ist, welche an den beiden Enden (1,2) des parallelepipedförmigen Substrats sowie über die Länge des Substrats verschweißt ist, wobei die sich auf der Oberseite des Substrats in Längsrichtung erstreckende Schweißnaht (4,5,6,7) nicht durchgehend ist und die Öffnungen (8,9,10) zwischen den beiden Rändern der Polymerfolie freiläßt.

## Claims

1. Soil-free culture substrate intended to accommodate a plurality of plants spaced from one another, which is enveloped by a sheath consisting of a polymer film, the upper surface of which includes a plurality of longitudinal apertures (8, 9, 10) which enable the sheath to cover almost all of the slab before the plants are put into place, the said apertures (8, 9, 10) being expandable owing to the resilience of the polymer film, in order to receive cubes or blocks (11) which have been used for the growth of the plants in a previous culture stage, these apertures (8, 9, 10) being disposed in a regular manner corresponding to all the positions liable to be opened up in order to insert the plants, characterised in that the sheath which envelopes the culture medium consists of a sheet which is sealed at both ends (1, 2) of the substrate which is in parallelepiped form, and along the length of the substrate, the longitudinal seal (4, 5, 6, 7) which extends along the upper surface of the substrate being only partial and providing the apertures (8, 9, 10) between the two edges of the polymer sheet.
